# DEMANDE DE BREVET EUROPEEN

(11) **EP 2 282 572 A1**
(43) Date de publication de la demande: **09.02.2011**
(21) Numéro de dépôt: 10169335.6
(22) Date de dépôt: 13.07.2010
(51) Int. Cl.: H04W 16/26

(54) **Méthode d'allocation de ressources de transmission dans un réseau cellulaire de type coopératif**

(30) Priorité: 20.07.2009 FR 0955024
(71) Demandeur: Commissariat à l'Énergie Atomique et aux Énergies Alternatives, 75015 Paris (FR)
(72) Inventeur: Calvanese Strinati, Emilio, 38000, GRENOBLE (FR); Abgrall, Cédric, 38000, GRENOBLE (FR)
(74) Mandataire: Augarde, Eric

(57) **Abrégé**

L'invention concerne une méthode d'allocation de ressources de transmission dans un réseau cellulaire de type coopératif. Chaque cellule comprend une source, un destinataire et, le cas échéant, un relais half-duplex pour relayer les données transmises par la source au destinataire. L'invention met à profit le mode half-duplex d'un relais appartenant à une cellule, en allouant à la source d'une cellule voisine, une ressource utilisée par ce relais pendant un même intervalle de transmission.

## Description

### DOMAINE TECHNIQUE

La présente invention concerne de manière générale le domaine des télécommunications cellulaires et plus particulièrement celles mettant en oeuvre une stratégie de coopération.

### ÉTAT DE LA TECHNIQUE ANTÉRIEURE

Une des techniques prometteuses récemment investiguées dans le cadre des nouvelles normes de télécommunications radio-mobiles, telles que WiMax, 3GPP LTE (*3GPP Long Term Evolution),* pour augmenter la couverture et le débit des réseaux cellulaires traditionnels est celle d'une stratégie de coopération déployée au niveau des stations de base ou au niveau des terminaux mobiles.

On trouvera des exemples de réseaux cellulaires mettant en oeuvre une stratégie de coopération dans l'article de S. Shamai et al. intitulé « Cooperative multi-cell networks : impact of limited capacity backhaul and inter-user links » publié dans Proc. of the Joint Workshop on Coding and Communications, Austria, Oct. 14-16.2007 et dans l'article de C. Hoymann et al. intitulé « Flexible Relay Wireless OFDM-based Networks » publié dans Proc. of 15th IST Mobile and Wireless Communication Summit, Juin 2006.

La coopération au niveau des stations de base, dite MCP (*Multi-Cell Processing*) revient à mettre en oeuvre un système d'antennes distribuées de type MIMO (*Multiple Input Multiple Output*) avec un codage/ décodage conjoint des signaux émis/reçus par les différentes antennes. Cette stratégie de coopération a toutefois pour inconvénient de surcharger le réseau capillaire (*backhaul network*) connectant les stations de base.

La coopération au niveau des terminaux mobiles se traduit par le fait que certains terminaux jouent le rôle de relais pour des terminaux destinataires, que ce soit pour des liaisons montantes (*uplink*) ou des liaisons descendantes (*downlink*). Il a été également proposé que certains relais fixes dédiés soient installés dans une cellule pour jouer ce rôle. Nous utiliserons par la suite l'expression « coopération par relais » pour désigner indifféremment l'une ou l'autre de ces techniques, le relais recevant dans les deux cas un signal d'une source (station de base pour la liaison descendante et terminal pour la liaison montante) et le retransmettant à un destinataire (station de base pour la liaison montante et terminal pour la liaison descendante).

Le relais peut retransmettre le signal de la source selon un mode full-duplex ou un mode half-duplex. De manière classique, en mode full-duplex le relais est capable de recevoir et de transmettre simultanément sur une même ressource alors qu'en mode half-duplex le relais est successivement dans une phase de réception et une phase de réception sur une ressource donnée.

Un exemple de coopération à l'aide de relais opérant en mode half-duplex est décrit dans l'article de O. Simeone et al. intitulé « Uplink throughput of TDMA cellular systems with multicell processing and Amplify-and Forward cooperation between mobiles » publié dans IEEE Trans. on Wireless Communications, Vol. 6, N° 8, pages 2942-2951, Août 2007.

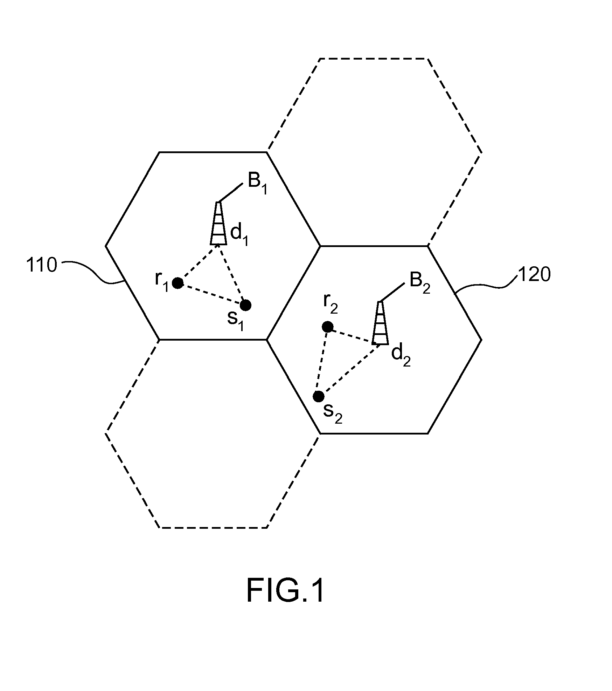

La Fig. 1 représente de manière très schématique un réseau cellulaire à coopération par relais half-duplex. On a représenté deux cellules adjacentes 110 et 120.

Dans la cellule 110, une source *s*₁ (ici un terminal mobile) transmet un flux de données à un destinataire *d*₁ (ici la station de base *B*₁). Le relais *r*₁ (ici un terminal mobile) reçoit également le flux de données issu de *s*₁ et le relaie au destinataire *d*₁. Le relais *r*₁ coopère ainsi à la transmission de données entre *s*₁ et *d*₁. Par exemple, si le canal *s*₁-*d*₁ est de mauvaise qualité, notamment à cause de la présence d'un obstacle entre *s*₁ et *d*₁, le canal *s*₁-*r*₁-*d*₁ peut permettre de le contourner et d'obtenir une qualité de liaison satisfaisante. Le flux de données peut être relayé par plusieurs terminaux pour augmenter davantage la diversité spatiale des trajets de transmission. En outre, il peut être relayé en une seule fois (*single-hop*) ou en plusieurs fois consécutives (*multiple-hop*).

De manière similaire, la cellule 120 comprend une source *s*₂ (ici la station de base *B*₂) qui transmet un flux de données au destinataire *d*₂ (ici un terminal mobile) à la fois en direct et via le relais *r*₂ (ici un terminal mobile).

Le terminal relais *r*₁ reçoit les données du terminal source *s*₁ pendant une phase d'écoute et les retransmet vers la station de base pendant une phase de transmission. La station de base destinataire reçoit ainsi les mêmes données, via des trajets différents, une première fois pendant l'intervalle de transmission du terminal source et une seconde fois pendant l'intervalle de transmission du terminal relais. La coopération est identique au sein de la cellule 120, avec pour seule différence le fait que la source est ici la station de base *B*₂ et la destination un terminal mobile.

Les réseaux cellulaires utilisant une coopération par relais posent de nouveaux problèmes en termes d'interférence inter et intra-cellulaire. Dans les réseaux cellulaires classiques, il est connu d'allouer des ressources de transmission distinctes (par exemple des fréquences) à des cellules adjacentes et de réutiliser ces ressources selon un schéma prédéterminé (*frequency reuse pattern*) dès lors que les cellules sont distantes. Ainsi pour un nombre de ressources de transmission donné, on réduit le niveau d'interférence inter-cellulaire, particulièrement critique en périphérie de cellule.

Il est possible d'utiliser un tel schéma d'allocation de ressources dans un réseau cellulaire à coopération par relais half-duplex. Toutefois, étant donné que le nombre de liaisons y est sensiblement plus élevé que dans un réseau cellulaire classique, cette stratégie d'allocation serait gourmande en ressources de transmission, comme expliqué ci-après.

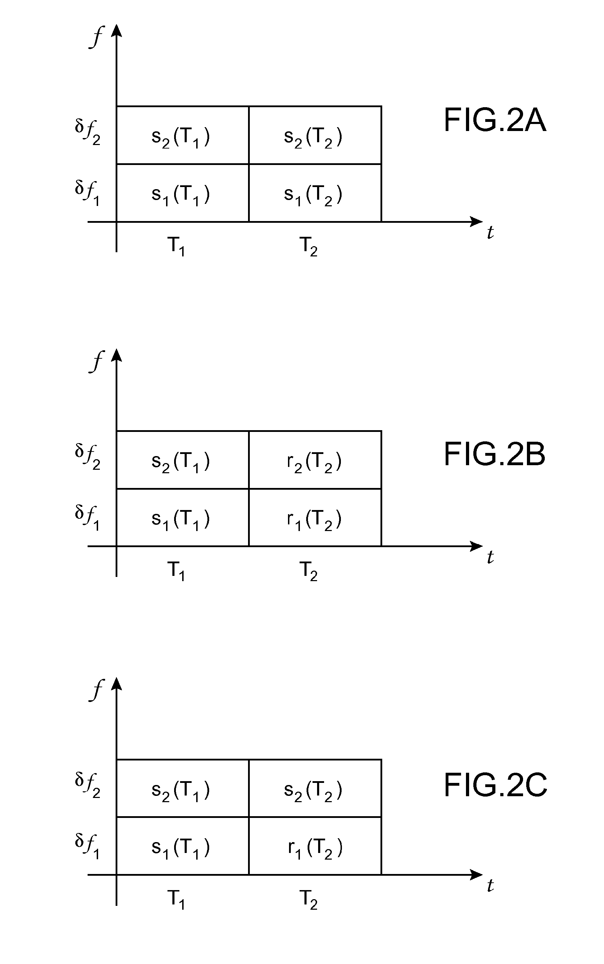

Les Figs. 2A et 2B représentent schématiquement une méthode d'allocation de ressources de transmission dans un réseau cellulaire respectivement sans et avec une coopération par relais half-duplex.

On a représenté en abscisses les intervalles temporels de transmission, ci-après simplement dénommés intervalles de transmission, relatifs aux différents terminaux et en ordonnées une autre ressource de transmission, par exemple pour un système OFDM des intervalles de fréquence (*frequency chunks*) δ*f*₁ et δ*f*₂.

En absence de coopération, cf. Fig. 2A, (les relais *r*₁ et *r*₂ sont absents ou inactifs), les sources *s*₁ et *s*₂ transmettent leurs flux de données pendant les intervalles de transmission *T*₁ et *T*₂ en modulant les sous-porteuses appartenant respectivement aux intervalles δ*f*₁ et δ*f*₂. On a noté *s*₁(*T*₁) et *s*₂(*T*₂) les données respectives émises par *s*₁ et *s*₂ pendant les intervalles *T*₁ et *T*₂.

En présence de coopération, cf. Fig. 2B, les sources *s*₁ et *s*₂ transmettent comme précédemment leurs flux de données pendant l'intervalle de transmission *T*₁ dans les intervalles δ*f*₁ et δ*f*₂. Les relais half-duplex *r*₁ et *r*₂ sont en phase d'écoute, respectivement sur δ*f*₁ et δ*f*₂ pendant l'intervalle *T*₁ et retransmettent les données reçues pendant l'intervalle *T*₂, par exemple en utilisant les mêmes intervalles de fréquence δ*f*₁ et δ*f*₂. On a noté *r*₁(*T*₁) et *r*₂(*T*₁) les données émises par *r*₁ et *r*₂ pendant l'intervalle *T*₁.

La Fig. 2C illustre une méthode d'allocation de ressources lorsqu'une seule des deux cellules adjacentes, ici 110, utilise une stratégie de coopération.

L'allocation pendant l'intervalle de transmission *T*₁ est identique à celle illustrée en Fig. 2A ou 2B. En revanche pendant l'intervalle de transmission *T*₂, le relais *r*₁ relaie les données reçues de *s*₁ en utilisant l'intervalle de fréquence δ*f*₁ et *s*₂ continue à transmettre ses données en utilisant l'intervalle de fréquence δ*f*₂.

On comprend que pour transmettre la même quantité de données, il faudra utiliser deux fois plus de ressources de transmission dans la configuration de coopération de la Fig. 2B que dans la configuration sans coopération de la Fig. 2A. De même il faudra utiliser une fois et demie plus de ressources dans la configuration de coopération mixte de la Fig. 2C que dans la configuration sans coopération de la Fig. 2A.

Le but de la présente invention est par conséquent de proposer une méthode d'allocation de ressources pour réseau cellulaire à coopération par relais half-duplex qui garantisse un faible niveau d'interférence inter-cellulaire sans mobiliser pour autant une quantité importante de ressources de transmission.

### EXPOSÉ DE L'INVENTION

La présente invention est définie par une méthode d'allocation de ressources dans un réseau cellulaire comprenant au moins deux cellules adjacentes, une première cellule comprenant une première source, un premier relais et un premier destinataire, et une seconde cellule comprenant au moins une seconde source et un second destinataire. Une première ressource de transmission est allouée au premier relais pendant un premier intervalle de transmission où celui-ci retransmet au premier destinataire des données préalablement reçues de la première source pendant au moins un intervalle de transmission précédent et ladite première ressource est également allouée à ladite seconde source pendant ledit premier intervalle de transmission.

Selon un mode de réalisation particulier, la seconde cellule comprend un second relais et une seconde ressource de transmission lui est allouée pendant un second intervalle de transmission où celui-ci retransmet au second destinataire des données préalablement reçues de la seconde source pendant au moins un intervalle de transmission précédent, ladite seconde ressource étant allouée également à ladite première source pendant ledit second intervalle de transmission.

Lesdits premier et second intervalles de transmission peuvent être choisis identiques ou distincts.

Selon un premier exemple de réalisation, on alloue respectivement à la première et la seconde sources un premier et un second intervalles de fréquence et, pendant chaque intervalle de transmission, on alloue au premier relais le second intervalle de fréquence pour y retransmettre les données qu'il a reçues de la première source sur le premier intervalle de fréquence pendant l'intervalle de transmission précédent.

Selon un second exemple de réalisation, on alloue respectivement à la première et à la seconde sources un premier et un second intervalles de fréquence pendant un intervalle de transmission courant et l'on permute cette allocation pendant l'intervalle de transmission suivant. On alloue également au premier relais, pendant l'intervalle de transmission courant le second intervalle de fréquence pour y retransmettre les données qu'il a reçues de la première source pendant l'intervalle de transmission précédent sur le second intervalle de fréquence, et l'on alloue au premier relais pendant l'intervalle de transmission suivant, le premier intervalle de fréquence pour y retransmettre les données de la première source qu'il a reçues pendant l'intervalle de transmission courant sur le premier intervalle de fréquence.

Selon un troisième exemple de réalisation, le second intervalle de transmission suit le premier intervalle de transmission, et l'on alloue à la première et à la seconde sources respectivement un premier et un second intervalles de fréquence pendant le premier intervalle de transmission, le second intervalle de fréquence étant également alloué au premier relais pendant le premier intervalle de transmission pour y retransmettre les données reçues de la première source pendant l'intervalle de transmission précédent, le premier intervalle de fréquence étant également alloué au second relais pendant le second intervalle de transmission pour y retransmettre les données reçues de la seconde source pendant le premier intervalle de transmission.

Selon un quatrième exemple de réalisation, on alloue respectivement à la première et la seconde sources un premier et un second intervalles de fréquence. Pendant un intervalle de transmission les premier et second relais reçoivent les données respectivement des première et seconde sources, et pendant l'intervalle de transmission suivant, on alloue au premier et au second relais respectivement le premier intervalle et le second intervalle de fréquence pour y retransmettre les données reçues respectivement de la première et de la seconde sources.

Selon un cinquième mode de réalisation, on alloue respectivement à la première et à la seconde sources un premier et un second intervalles de fréquence pendant un intervalle de transmission courant et l'on permute cette allocation pendant l'intervalle de transmission suivant. Pendant l'intervalle de transmission courant, on alloue au premier relais le second intervalle de fréquence pour y retransmettre les données qu'il a reçues de la première source sur le second intervalle de fréquence pendant l'intervalle de transmission précédent et au second relais le second intervalle de fréquence pour y retransmettre les données qu'il a reçues de la seconde source sur le premier intervalle de fréquence pendant l'intervalle de transmission précédent. Pendant l'intervalle de transmission suivant, on alloue au premier relais le premier intervalle de fréquence pour y retransmettre les données de la première source qu'il a reçues pendant l'intervalle de transmission courant sur le premier intervalle de fréquence et au second relais le second intervalle de fréquence pour y retransmettre les données de la seconde source qu'il a reçues pendant l'intervalle de transmission courant sur le second intervalle de fréquence.

Selon un sixième exemple de réalisation, à chaque intervalle de transmission, on alloue respectivement à la première et à la seconde sources un premier et un second intervalles de fréquence et, pendant ce même intervalle, on alloue au premier relais le second intervalle de fréquence pour y retransmettre les données qu'il a reçues de la première source sur le premier intervalle de fréquence pendant l'intervalle de transmission précédent et, au second relais, le second intervalle de fréquence pour y retransmettre les données qu'il a reçues de la seconde source sur le second intervalle de fréquence pendant l'intervalle de transmission précédent.

### BRÈVE DESCRIPTION DES DESSINS

D'autres caractéristiques et avantages de l'invention apparaîtront à la lecture d'un mode de réalisation préférentiel de l'invention fait en référence aux figures jointes parmi lesquelles :
La Fig. 1 représente schématiquement un réseau cellulaire à coopération par relais connu de l'état de la technique ;
Les Figs. 2A et 2B représentent respectivement une allocation de ressources sans et avec une coopération par relais dans deux cellules adjacentes ;
La Fig. 2C représente une allocation de ressources dans une configuration de coopération par relais dans une seule des deux cellules adjacentes;
Les Fig. 3A et 3B illustrent schématiquement deux exemples d'allocation de ressources selon l'invention pour un réseau cellulaire présentant une coopération par relais dans une seule des cellules adjacentes ;
Les Figs. 3C à 3E illustrent schématiquement des exemples d'allocation de ressources selon l'invention pour un réseau cellulaire présentant une coopération par relais dans deux cellules adjacentes.

### EXPOSÉ DÉTAILLÉ DE MODES DE RÉALISATION PARTICULIERS

On considère à nouveau un réseau cellulaire de type coopératif dans lequel la stratégie de coopération fait appel à des relais opérant en mode half-duplex. Ainsi chaque cellule peut comprendre un ensemble de sources, un ensemble de destinataires et un ensemble de relais, ce dernier pouvant être vide si aucune coopération par relais n'est envisagée dans la cellule considérée. Lorsqu'une cellule desservie par une station de base, est elle-même divisée en secteurs ou en microcellules et qu'une allocation de ressource est prévue dans chaque secteur/microcellule, on convient, sans perte de généralité, que le terme de « cellule » s'applique alors à l'entité de base dans laquelle est effectuée l'allocation de ressources.

De manière générale, le réseau cellulaire utilise des ressources de transmission qui peuvent être des intervalles de transmission (cf. système TDMA), des fréquences (cf. système FDMA), des intervalles de fréquence (cf. système OFDMA), des codes orthogonaux (cf. système CDMA) ou des combinaisons de telles ressources.

Dans un mode préférentiel de réalisation relatif à un système OFDMA, les ressources sont choisies comme étant des intervalles de transmission (*timeslots*) et des intervalles de fréquence, plus précisément des groupes de sous-porteuses (*frequency chunks*) d'un multiplex OFDM.

Une première idée à la base de l'invention est que la stratégie de coopération par relais n'est efficace que dans la mesure où le canal entre la source et le relais n'est que faiblement interféré. En effet, si ce canal est interféré, le signal décodé puis retransmis (relais de type *decode and forward*) ou le signal amplifié puis retransmis (relais de type *amplify and forward*) peut être de mauvaise qualité. Il s'ensuit que le rapport signal sur bruit au niveau destinataire est moindre qu'en absence de coopération.

Une seconde idée à la base de l'invention est de tirer parti du fonctionnement half-duplex des relais en question. Plus précisément lorsqu'un tel relais est en phase de transmission sur une ressource donnée, par exemple une bande de fréquence, il ne peut recevoir en même temps sur cette ressource. Cette ressource peut être alors allouée simultanément à une autre source dans une cellule voisine. Quand bien même cette allocation induirait une interférence sur le canal entre le relais et le destinataire, cette interférence sera moins pénalisante en termes de rapport signal sur bruit au niveau du destinataire que si elle était intervenue sur le canal entre la source et le relais.

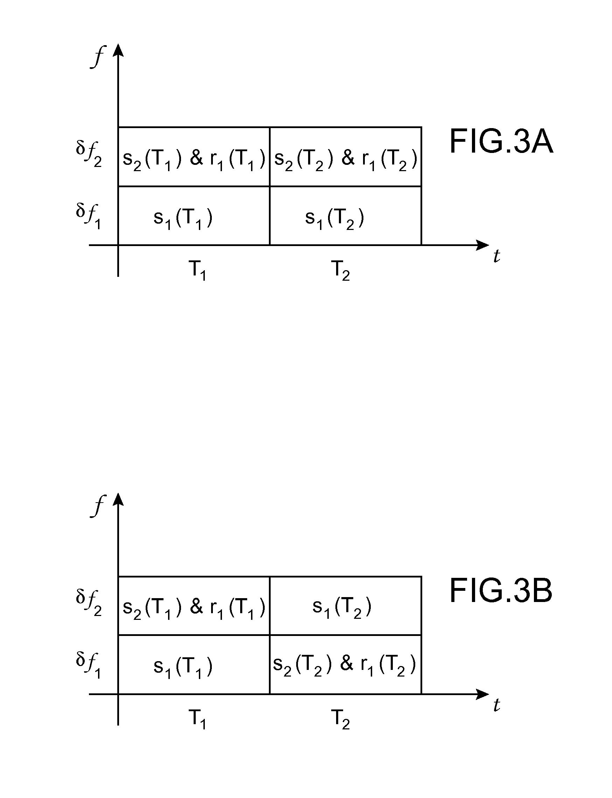

La Fig. 3A représente un exemple d'allocation de ressources selon l'invention dans un réseau cellulaire avec coopération par relais, tel que celui représenté en Fig. 1. On suppose ici que seule la cellule 110 utilise une coopération par relais, autrement dit que le relais *r*₂ est absent ou inactif.

Pendant l'intervalle *T*₁, la source *s*₁ transmet ses données sur la ressource δ*f*₁ et la source *s*₂ transmet ses données sur la ressource δ*f*₂. Dans le même intervalle, le relais *r*₁ reçoit les données de *s*₁ sur la ressource δ*f*₁ et transmet sur la ressource δ*f*₂ celles qu'il a préalablement reçues pendant l'intervalle précédent (ici *T*₀). Comme précédemment on a désigné par *sᵢ*(*Tⱼ*) les données émises par la source *s*ᵢ pendant l'intervalle *Tⱼ* et *rᵢ*(*Tⱼ*) les données retransmises par le relais *rᵢ* pendant l'intervalle *Tⱼ*. En mode half-duplex, un relais est capable de recevoir sur une première ressource, par exemple δ*fᵢ* et transmettre simultanément sur une seconde ressource δ*fⱼ*≠δ*fᵢ*. Il convient de noter que les données retransmises par le relais ne le sont pas nécessairement sous une forme identique à celle des données qu'il a reçues. Ces données reçues peuvent par exemple être décodées puis réencodées.

Pendant l'intervalle *T*₂, l'allocation de ressources se répète à l'identique et le relais *r*₁ transmet sur la ressource δ*f*₂ les données qu'il a reçues sur la ressource δ*f*₁ pendant l'intervalle *T*₁.

On comprend ainsi que le canal *s*₁-*r*₁ utilisant δ*f*₁ n'est jamais interféré par la communication entre *s*₂ et *d*₂ utilisant δ*f*₂.

La Fig. 3B donne un autre exemple d'allocation selon l'invention pour une même configuration de coopération que celle de la Fig. 3A.

A la différence du schéma d'allocation précédent, l'allocation des ressources δ*f*₁ et δ*f*₂ est inversée entre le premier et le second intervalles. Plus précisément, pendant l'intervalle *T*₂, le relais *r*₁ reçoit les données de *s*₁ sur la ressource δ*f*₂ et transmet sur la ressource δ*f*₁ les données qu'il a reçues de *s*₁ sur la ressource δ*f*₁ pendant l'intervalle *T*₁.

Ainsi le relais *r*₁ reçoit et transmet en alternance sur l'une et l'autre ressource à la différence du schéma de la Fig. 3A. Toutefois, comme précédemment, on notera que le canal *s*₁-*r*₁ n'est pas interféré par la communication entre *s*₂ et *d*₂.

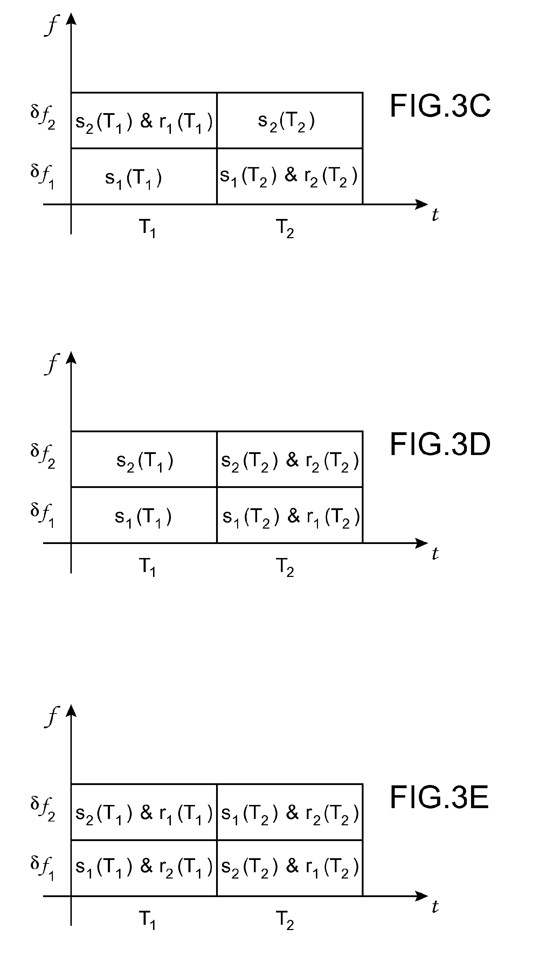

La Fig. 3C illustre un exemple d'allocation de ressources selon l'invention dans un réseau cellulaire mettant en oeuvre une coopération par relais dans deux cellules adjacentes 110 et 120.

L'allocation de ressources pendant l'intervalle de transmission *T*₁ est identique à celle représentée en Figs. 3A et 3B. Autrement dit, les sources *s*₁ et *s*₂ transmettent leurs données en utilisant respectivement les ressources δ*f*₁ et δ*f*₂, et le relais *r*₁ retransmet sur la ressource δ*f*₂ les données qu'il a reçues de *s*₁ pendant l'intervalle *T*₀. En revanche, à la différence des schémas d'allocation précédents, le relais *r*₂ transmet pendant l'intervalle *T*₂ sur la ressource δ*f*₁ les données qu'il a préalablement reçues à l'intervalle précédent sur la ressource δ*f*₂.

On comprendra ainsi que les canaux *s*₁-*r*₁ et *s*₂-*r*₂ ne sont jamais interférés. En revanche, la coopération n'est effective qu'une fois sur deux dans la mesure où les relais ne sont en réception qu'un intervalle sur deux. Dans le cas illustré, le relais *r*₁ n'est pas en réception pendant l'intervalle *T*₂ mais seulement pendant l'intervalle *T*₁. De même, le relais *r*₂ n'est pas en réception pendant l'intervalle *T*₁ mais seulement pendant l'intervalle *T*₂.

Selon une variante non représentée, les relais *r*₁ et *r*₂ sont en permanence en réception, respectivement sur les ressources δ*f*₁ et δ*f*₂. Pendant l'intervalle *T*₁, le relais *r*₁ transmet sur la ressource δ*f*₂ les données préalablement reçues de *s*₁ pendant les intervalles *T*₋₁ et *T*₀. De manière similaire, pendant l'intervalle *T*₂ le relais *r*₂ transmet sur la ressource δ*f*₁ les données préalablement reçues pendant les intervalles de *s*₂ pendant les intervalles *T*₀ et *T*₁. Il est à noter toutefois que pendant l'intervalle *T*₁, le canal *s*₂-*r*₂ est interféré par la retransmission de *r*₁ et pendant l'intervalle *T*₂ le canal *s*₁-*r*₁ est interféré par la retransmission de *r*₂. En outre, les données doivent être retransmises par les relais avec un débit deux fois plus élevé que le débit des sources.

La Fig. 3D représente un autre exemple d'allocation de ressources selon l'invention. La situation de coopération par relais est la même que celle envisagée en Fig. 3C.

Lors du premier intervalle de transmission *T*₁, la source *s*₁ transmet ses données en utilisant la ressource δ*f*₁ et la source *s*₂ transmet ses données en utilisant la ressource δ*f*₂. Les relais *r*₁ et *r*₂ reçoivent respectivement les données de *s*₁ et *s*₂ pendant *T*₁ et les retransmettent pendant *T*₂ sur les ressources δ*f*₁ et δ*f*₂ respectivement. Les sources continuent à émettre leurs données sur ces mêmes ressources pendant le second intervalle de transmission.

Ainsi les canaux *s*₁-*r*₁ et *s*₂-*r*₂ ne sont pas interférés ni pendant *T*₁ ni pendant *T*₂.

La Fig. 3E illustre un dernier exemple d'allocation de ressources selon l'invention. La situation de coopération par relais est encore la même que celle envisagée en Fig. 3C.

Pendant l'intervalle de transmission *T*₁ les sources *s*₁ et *s*₂ transmettent leurs données respectives sur les ressources δ*f*₁ et δ*f*₂. Le relais *r*₁ est en réception des données de *s*₁ sur la ressource δ*f*₁ et retransmet sur la ressource δ*f*₂ celles reçues préalablement de cette source pendant l'intervalle *T*₀. De manière similaire, le relais *r*₂ reçoit les données de *s*₂ sur la ressource δ*f*₂ pendant cet intervalle et retransmet sur la ressource δ*f*₁ celles reçues préalablement de celle-ci lors de l'intervalle *T*₀.

Pendant l'intervalle *T*₂ l'allocation de ressources est inversée tant pour les sources *s*₁ et *s*₂ que pour les relais *r*₁ et *r*₂. Autrement dit, les sources *s*₁ et *s*₂ transmettent leurs données respectives sur les ressources δ*f*₂ et δ*f*₁. Le relais *r*₁ reçoit les données de *s*₁ sur la ressource δ*f*₂ et retransmet sur la ressource δ*f*₁ celles reçues préalablement pendant l'intervalle *T*₁. De manière similaire, le relais *r*₂ reçoit les données de *s*₂ sur la ressource δ*f*₁ et retransmet sur la ressource δ*f*₂ celles reçues préalablement pendant l'intervalle *T*₁.

Lors de l'intervalle *T*₁ ou de l'intervalle *T*₂ le canal *s*₁-*r*₁ n'est interféré que par la retransmission de *r*₂ et le canal *s*₂-*r*₂ n'est interféré que par la retransmission de *r*₁.

Selon une variante non représentée de l'exemple illustré en Fig. 3E, l'allocation de ressources pendant le second intervalle est choisie identique à celle du premier intervalle.

Dans tous les exemples précités, on exploite le mode half-duplex d'un relais appartenant à une cellule, en allouant à une source d'une cellule voisine la ressource utilisée par ce relais pendant le même intervalle de transmission.

Bien que la présente invention ait été précédemment décrite en relation avec deux cellules avoisinantes, l'homme du métier comprendra qu'elle peut s'étendre sans difficulté à un nombre quelconque de telles cellules. De même, bien que la présente invention ait été illustrée à l'aide de deux intervalles de transmission et de manière plus générale de deux ressources de transmission pour deux sources, l'homme du métier comprendra qu'elle s'applique de manière générale à un nombre quelconque de ressources de transmission pour une pluralité de sources.

## Revendications

1. Méthode d'allocation de ressources dans un réseau cellulaire comprenant au moins deux cellules adjacentes (110, 120), une première cellule (100) comprenant une première source (*s*₁), un premier relais (*r*₁) et un premier destinataire (*d*₁) et une seconde cellule (120) comprenant au moins une seconde source (*s*₂) et un second destinataire (*d*₂), **caractérisée en ce qu'**une première ressource de transmission est allouée au premier relais pendant un premier intervalle de transmission où celui-ci retransmet au premier destinataire des données préalablement reçues de la première source pendant au moins un intervalle de transmission précédent et que ladite première ressource est également allouée à ladite seconde source pendant ledit premier intervalle de transmission.

2. Méthode d'allocation de ressources selon la revendication 1, **caractérisée en ce que** la seconde cellule comprend un second relais et qu'une seconde ressource de transmission lui est allouée pendant un second intervalle de transmission où celui-ci retransmet au second destinataire des données préalablement reçues de la seconde source pendant au moins un intervalle de transmission précédent, ladite seconde ressource étant allouée également à ladite première source pendant ledit second intervalle de transmission.

3. Méthode d'allocation de ressources selon la revendication 2, **caractérisée en ce que** lesdits premier et second intervalles de transmission sont identiques.

4. Méthode d'allocation de ressources selon la revendication 2, **caractérisée en ce que** lesdits premier et second intervalles de transmission sont distincts.

5. Méthode d'allocation de ressources selon la revendication 1, **caractérisée en ce qu'**on alloue respectivement à la première et la seconde sources un premier et un second intervalles de fréquence (δ*f*₁,δ*f*₂) et que pendant chaque intervalle de transmission (*T*₁,*T*₂) on alloue au premier relais le second intervalle de fréquence (δ*f*₂) pour y retransmettre les données qu'il a reçues de la première source sur le premier intervalle de fréquence (δ*f*₁) pendant l'intervalle de transmission précédent (*T*₀*,T*₁).

6. Méthode d'allocation de ressources selon la revendication 1, **caractérisée en ce qu'**on alloue respectivement à la première et à la seconde sources un premier et un second intervalles de fréquence (δ*f*₁,δ*f*₂) pendant un intervalle de transmission courant (*T*₁) et que l'on permute cette allocation pendant l'intervalle de transmission suivant (*T*₂), que l'on alloue au premier relais, pendant l'intervalle de transmission courant le second intervalle de fréquence (δ*f*₂) pour y retransmettre les données qu'il a reçues de la première source pendant l'intervalle de transmission précédent sur le second intervalle de fréquence (δ*f*₂), et que l'on alloue au premier relais pendant l'intervalle de transmission suivant (*T*₂), le premier intervalle de fréquence (δ*f*₁) pour y retransmettre les données de la première source qu'il a reçues pendant l'intervalle de transmission courant (*T*₁) sur le premier intervalle de fréquence (δ*f*₁).

7. Méthode d'allocation de ressources selon la revendication 4, **caractérisée en ce que** le second intervalle de transmission suit le premier intervalle de transmission, et qu'on alloue à la première et à la seconde sources respectivement un premier et un second intervalles de fréquence (δ*f*₁,δ*f*₂) pendant le premier intervalle de transmission (*T*₁), le second intervalle de fréquence (δ*f*₂) étant également alloué au premier relais pendant le premier intervalle de transmission pour y retransmettre les données (*r*₁(*T*₀)) reçues de la première source pendant l'intervalle de transmission précédent (*T*₀), le premier intervalle de fréquence (δ*f*₁) étant également alloué au second relais pendant le second intervalle de transmission pour y retransmettre les données (*r*₂(*T*₁)) reçues de la seconde source pendant le premier intervalle de transmission (*T*₁).

8. Méthode d'allocation de ressources selon la revendication 3, **caractérisé en ce que** l'on alloue respectivement à la première et la seconde sources un premier et un second intervalles de fréquence (δ*f*₁,δ*f*₂) et que pendant un intervalle de transmission (*T*₁) les premier et second relais reçoivent les données respectivement des première et seconde sources, et que pendant l'intervalle de transmission suivant on alloue au premier et au second relais respectivement le premier intervalle et le second intervalle de fréquence pour y retransmettre les données reçues respectivement de la première et de la seconde sources.

9. Méthode d'allocation de ressources selon la revendication 3, **caractérisé en ce qu'**on alloue respectivement à la première et à la seconde sources un premier et un second intervalles de fréquence (δ*f*₁,δ*f*₂) pendant un intervalle de transmission courant (*T*₁) et que l'on permute cette allocation pendant l'intervalle de transmission suivant (*T*₂), que pendant l'intervalle de transmission courant, on alloue au premier relais le second intervalle de fréquence (δ*f*₂) pour y retransmettre les données qu'il a reçues de la première source sur le second intervalle de fréquence (δ*f*₂) pendant l'intervalle de transmission précédent (*T*₀) et au second relais le second intervalle de fréquence (δ*f*₂) pour y retransmettre les données qu'il a reçues de la seconde source sur le premier intervalle de fréquence (δ*f*₁) pendant l'intervalle de transmission précédent (*T*₀) et que, pendant l'intervalle de transmission suivant (*T*₂), on alloue au premier relais le premier intervalle de fréquence (δ*f*₁) pour y retransmettre les données de la première source qu'il a reçues pendant l'intervalle de transmission courant (*T*₁) sur le premier intervalle de fréquence (δ*f*₁) et au second relais le second intervalle de fréquence (δ*f*₂) pour y retransmettre les données de la seconde source qu'il a reçues pendant l'intervalle de transmission courant (*T*₁) sur le second intervalle de fréquence (δ*f*₂).

10. Méthode d'allocation de ressources selon la revendication 3, **caractérisé en ce qu'**à chaque intervalle de transmission (*T*₁) on alloue respectivement à la première et à la seconde sources un premier et un second intervalles de fréquence (δ*f*₁,δ*f*₂) et que, pendant ce même intervalle, on alloue au premier relais le second intervalle de fréquence (δ*f*₂) pour y retransmettre les données qu'il a reçues de la première source sur le premier intervalle de fréquence (δ*f*₁) pendant l'intervalle de transmission précédent (*T*₀) et au second relais le second intervalle de fréquence (δ*f*₂) pour y retransmettre les données qu'il a reçues de la seconde source sur le second intervalle de fréquence (δ*f*₂) pendant l'intervalle de transmission précédent (*T*₀).
